# FASCICULE DE BREVET EUROPEEN

(11) **EP 4 212 072 B1**
(45) Date de publication et mention de la délivrance du brevet: **13.11.2024**
(21) Numéro de dépôt: 23150650.2
(22) Date de dépôt: 09.01.2023
(51) Int. Cl.: A47J 31/44

(54) **MACHINE DE DISTRIBUTION DE BOISSONS COMPORTANT UN RESERVOIR MOBILE EN ROTATION ET UN CAPTEUR DE POIDS**
GETRÄNKEMASCHINE MIT EINEM DREHBAREN BEHÄLTER UND EINEM GEWICHTSSENSOR
BEVERAGE DISPENSING MACHINE COMPRISING A ROTATABLY MOBILE RESERVOIR AND A WEIGHT SENSOR

(30) Priorité: 14.01.2022 FR 2200303
(43) Date de publication de la demande: 19.07.2023
(73) Titulaire: SEB S.A., 69130 Ecully (FR)
(72) Inventeur: PETIT, Michel, 69134 ECULLY CEDEX (FR); SMAL, Chloé, 69134 ECULLY CEDEX (FR); MUGNIER, Cédric, 69134 ECULLY CEDEX (FR)
(74) Mandataire: Cabinet Didier Martin

(56) Documents cités:
- CN-A- 107 898 317
- FR-A3- 2 544 604

## Description

### Domaine technique

La présente invention concerne le domaine technique général des machines de distribution de boissons qui comporte un réservoir de liquide muni d'un capteur de poids permettant de mesurer une valeur représentative du poids du réservoir et du liquide présent dans le réservoir.

### Etat de la technique

Il est connu du document KR0146177 une machine de distribution de boissons qui comporte un bâti, un réservoir de liquide monté mobile dans le bâti et un système de commande. Le capteur de poids est agencé entre le réservoir et le bâti pour déterminer et transmettre au dispositif de commande une valeur représentative du poids du liquide présent dans le réservoir.

Cependant, le réservoir est guidé en translation verticale pour reposer sur le capteur de poids. Un tel guidage en translation génère de nombreux frottements qui vont induire des erreurs dans la détermination du poids du réservoir et du liquide présent dans le réservoir par le capteur de poids.

De plus, la mise en oeuvre du guidage du réservoir en translation verticale est souvent complexe et coûteuse. Une machine de distribution de boissons est connue du document FR2544604.

### Résumé de l'invention

La présente invention vise à remédier à ces inconvénients.

Le problème technique à la base de l'invention consiste à proposer une machine de distribution de boissons qui comporte un réservoir de liquide muni d'un capteur de poids qui permette de connaitre de manière fiable et précise le volume de liquide présent dans le réservoir.

Un autre but de l'invention est de proposer une machine de distribution de boissons qui comporte un réservoir de liquide muni d'un capteur de poids qui soit simple et économique à mettre en oeuvre.

A cet effet, l'invention a pour objet une machine de distribution de boissons comportant un bâti, un réservoir de liquide monté mobile dans le bâti, un système de commande et un capteur de poids agencé entre le réservoir et le bâti pour déterminer et transmettre au dispositif de commande une valeur représentative du poids du liquide présent dans le réservoir, caractérisé en ce que le réservoir est mobile en rotation dans le bâti autour d'un axe de rotation, le réservoir reposant sur le bâti en des premier et deuxième points d'appui qui définissent l'axe de rotation et le réservoir reposant sur le capteur de poids en un troisième point d'appui.

Ainsi, le guidage en rotation du réservoir dans le bâti génère très peu de frottements. En conséquence, le capteur de poids n'est pas perturbé dans sa mesure et peut déterminer une valeur représentative du poids du liquide présent dans le réservoir de manière fiable et répétitive.

De manière avantageuse, l'axe de rotation est horizontal.

De manière avantageuse, les premier et deuxième points d'appui sont espacés d'une distance supérieure à 10 centimètres.

Avantageusement, le premier point d'appui est formé par une première pointe conique et par un premier logement conique, la pointe conique appartenant au réservoir et le premier logement conique appartenant au bâti ou réciproquement.

On comprend que la première pointe conique comporte une extrémité libre et que le premier logement conique comporte un fond, l'extrémité libre de la première pointe conique étant en appui ponctuel sur le fond du premier logement conique. La première pointe conique et le premier logement conique sont de formes complémentaires.

De préférence, le deuxième point d'appui est formé par une deuxième pointe conique et par un deuxième logement comportant une rainure en V qui s'étend le long de l'axe de rotation, la deuxième pointe conique appartenant au réservoir et le deuxième logement comportant une rainure en V appartenant au bâti ou réciproquement.

Ainsi, la deuxième pointe conique peut se déplacer dans la rainure en V pour absorber toutes les dispersions de fabrication des pièces du bâti et du réservoir.

On comprend que la deuxième pointe conique comporte une extrémité libre et la rainure en V comporte un fond, l'extrémité libre de la deuxième pointe conique étant en appui ponctuel sur le fond de la rainure en V du deuxième logement. La deuxième pointe conique et le V de la rainure sont de formes complémentaires.

Avantageusement, la machine de distribution de boissons comporte des moyens de mise en pression du réservoir sur le bâti en les premier et deuxième points d'appui.

Ainsi, le réservoir ne repose pas sur le bâti uniquement par la gravité. Les moyens de mise en pression garantissent un bon maintien du réservoir sur le bâti en les premier et deuxième points d'appui.

De préférence les moyens de mise en pression du réservoir sur le bâti comportent au moins un ressort.

Une telle disposition permet d'obtenir une construction particulièrement économique.

Avantageusement, le réservoir comporte une paroi de fond, l'axe de rotation étant agencé sous la paroi de fond.

Une telle disposition permet d'obtenir un encombrement compact de la machine de distribution de boissons.

De préférence, le fond du réservoir comporte un premier bord et un deuxième bord agencé de manière opposée au premier deuxième bord, l'axe de rotation étant agencé à proximité du premier bord et le capteur de poids étant agencé à proximité du deuxième bord.

Ainsi, dans une projection verticale sur un plan horizontal, l'axe de rotation et le capteur de poids peuvent être suffisamment éloignés, le centre de gravité du réservoir étant situé entre l'axe de rotation et le capteur de poids.

De manière avantageuse, le bâti comporte une paroi arrière, le capteur de poids étant agencé à proximité de la paroi arrière, entre la paroi de fond et le bâti.

Avantageusement, les premier, deuxième et troisième points d'appui sont agencés dans un plan horizontal.

Ainsi, une machine de distribution de boissons standard peut être facilement modifiée pour y adapter le réservoir mobile en rotation et le capteur de poids, notamment lorsque le plan horizontal est agencé sous la paroi de fond du réservoir.

De préférence, le capteur de poids comporte une jauge de contrainte agencée sur un corps métallique qui subit une déformation sous l'action du poids du liquide présent dans le réservoir.

Une telle construction du capteur de poids est particulièrement économique.

Avantageusement, la machine de distribution de boissons est une machine à café filtre ou une machine à thé.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'une machine de distribution de boissons comportant un réservoir de liquide muni d'un capteur de poids selon un mode particulier de réalisation de l'invention.
La figure 2 est une vue en perspective de la machine de distribution de boissons illustrée sur la figure 1, le réservoir étant retiré.
La figure 3 est une vue en perspective selon une direction III du réservoir de la machine de distribution de boissons illustrée sur la figure 1.
La figure 4 est une vue en coupe partielle selon une direction IV-IV de la machine de distribution de boissons illustrée sur la figure 1.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire la machine de distribution de boissons font référence à cette machine de distribution de boissons reposant sur un plan de travail, en situation d'usage.

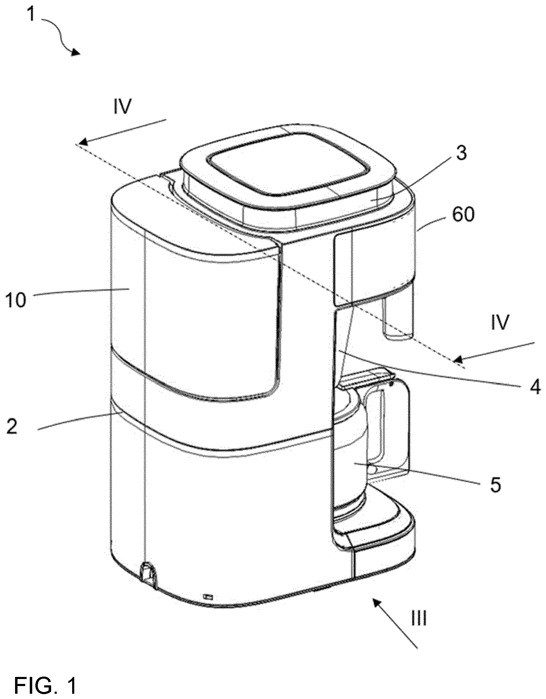

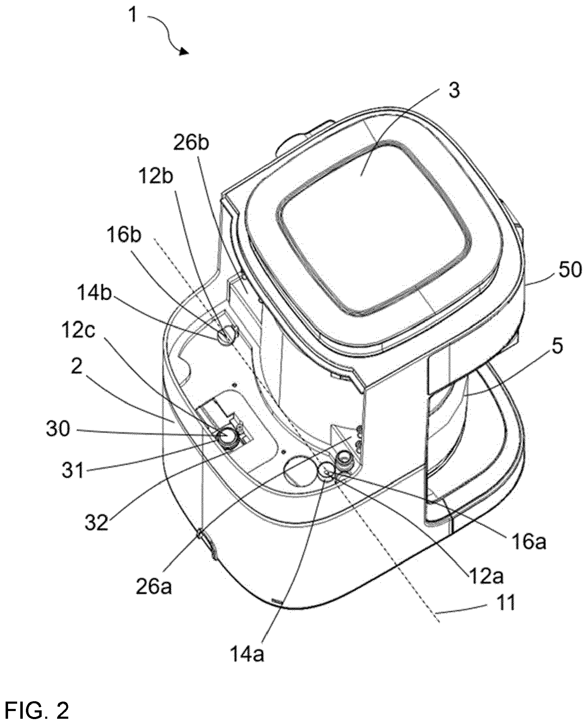

Dans l'exemple de réalisation représenté aux figures 1 à 4, la machine de distribution de boissons est une machine à café filtre 1. La machine à café filtre 1 comporte un bâti 2, un réservoir 10, un capteur de poids 30 (fig. 2), une chaudière bitube (non illustrée sur les figures), une douchette (non illustrée sur les figures), un distributeur de mouture 3, un porte filtre 4, une verseuse 5 et un système de commande 50. Le réservoir 10 est destiné à recevoir un liquide qui est formé par de l'eau. Le réservoir 10 est mobile en rotation dans le bâti 2 autour d'un axe de rotation 11. Le réservoir 10 repose sur le bâti 2 en des premier 12a et deuxième 12b points d'appui. Une droite qui passe par les premier 12a et deuxième 12b points d'appui définit l'axe de rotation 11 du réservoir 10. Le réservoir 10 repose sur un troisième point d'appui 12c formé par le capteur de poids 30.

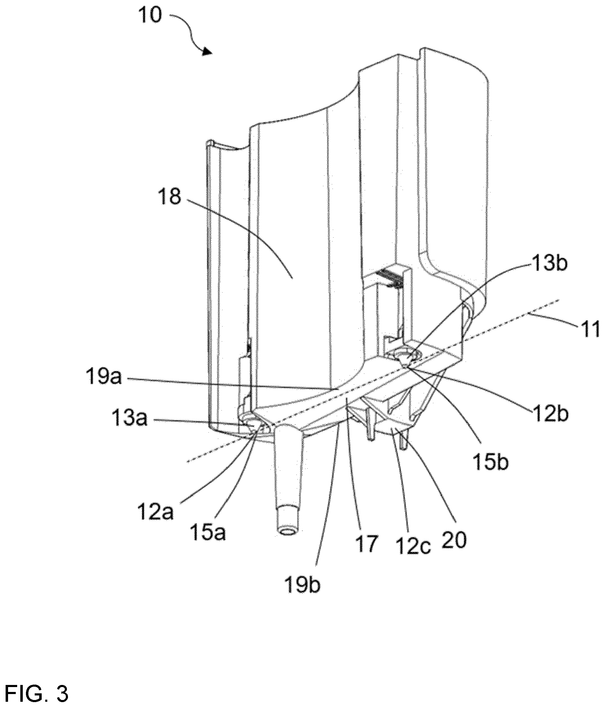

Tel que visible aux figures 2 à 4, le premier point d'appui 12a est formé par une première pointe conique 13a agencée sur le réservoir 10 et par un premier logement conique 14a agencé sur le bâti 2. La première pointe conique 13a comporte une extrémité libre 15a (Fig. 3) et le premier logement conique 14a comporte un fond 16a (Fig. 2). L'extrémité libre 15a de la première pointe conique 13a est en appui ponctuel sur le fond 16a du premier logement conique 14a. La première pointe conique 13a et le premier logement conique 14a sont de formes complémentaires, le cône du premier logement conique 14a étant légèrement plus ouvert que le cône de la première pointe conique 13a pour autoriser une rotation du réservoir 10. Le deuxième point d'appui 12b est formé par une deuxième pointe conique 13b agencé sur le réservoir 10 et par un deuxième logement 14b comportant une rainure en V et qui est agencé sur le réservoir 10. La rainure en V s'étend le long de l'axe de rotation 11. La deuxième pointe conique 13b comporte une extrémité libre 15b (Fig. 3) et la rainure en V comporte un fond 16b (Fig. 2). L'extrémité libre 15b de la deuxième pointe conique 13b est en appui ponctuel sur le fond 16b de la rainure en V du deuxième logement 14b. La deuxième pointe conique 13b et le V de la rainure sont de formes complémentaires, le V de la rainure étant légèrement plus ouvert que le cône de la deuxième pointe conique 13b pour autoriser une rotation du réservoir 10.

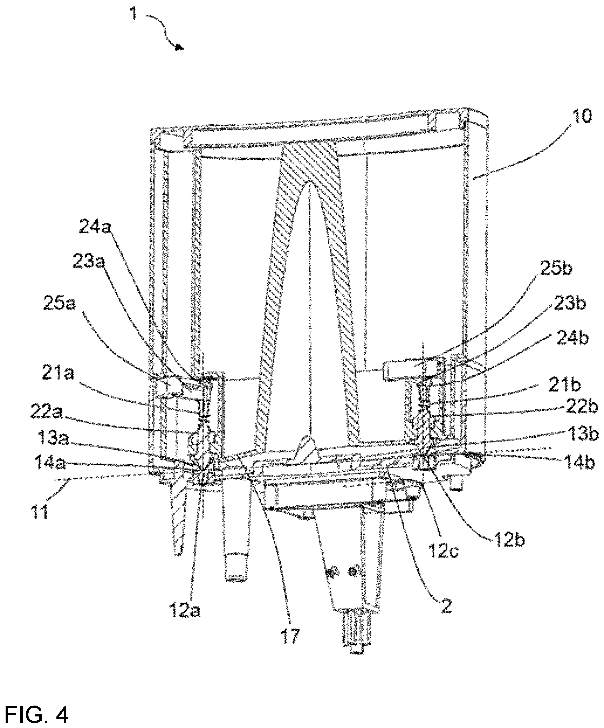

Conformément aux figures 3 et 4, le réservoir 10 comporte une paroi de fond 17 et une paroi verticale 18 orientée vers l'intérieur de la machine à café filtre 1. Les première 13a et deuxième 13b pointes coniques sont agencées sur la paroi de fond 17, à proximité de la paroi latérale 18 (Fig. 3). Ainsi, l'axe de rotation 11 est agencé sous la paroi de fond 17 du réservoir 10, vers l'intérieur de la machine à café filtre 1. La paroi de fond 17 comporte un premier bord 19a au niveau de sa liaison avec la paroi verticale 18. La paroi de fond 17 comporte un deuxième bord 19b (Fig. 3) agencé en vis-à-vis du premier bord 19a. La paroi de fond 17 comporte une patte 20 agencée à proximité du deuxième bord 18b. La patte 20 est destinée à venir au contact du capteur de poids 30 agencé sur le bâti 2 pour former le troisième point d'appui 12c. Les premier 12a, deuxième 12b et troisième 12c points d'appui sont agencés dans un plan horizontal.

Tel que visible sur la figure 4, la machine à café filtre 1 comporte des moyens de mise en pression 21a, 21b du réservoir 10 sur le bâti 2 au niveau des premier 12a et deuxième 12b points d'appui. Les moyens de mise en pression du réservoir 10 sur le bâti 2 comportent des premier 21a et deuxième 21b ressorts qui sont agencés à l'aplomb des première 13a et deuxième 13b pointes coniques. Le réservoir 10 comporte des premier 22a et deuxième 22b épaulements agencés au-dessus des première 13a et deuxième 13b pointes coniques. La machine à café filtre 1 comporte des premier 23a et deuxième 23b bras (non coupés sur la figure 4). Les premier 23a et deuxième 23b bras comportent des première 24a et deuxième 24b extrémités libres et des première 25a et deuxième 25b extrémités de fixation. Les premier 21a et deuxième 21b ressorts sont agencés le long d'un axe vertical, sous les première 24a et deuxième 24b extrémités libres et en appui sur les premier 22a et deuxième 22b épaulements. Le bâti 2 comporte des première 26a et deuxième 26b parois de réception (fig.2). Les première 25a et deuxième 25b extrémités de fixation sont assemblées par vissage vers le bas, le long d'un axe vertical, sur les première 26a et deuxième 26b parois de réception. Lors du vissage des première 25a et deuxième 25b extrémités de fixation, les première 24a et deuxième 24b extrémités libres compriment les premier 21a et deuxième 21b ressorts pour plaquer les première 13a et deuxième 13b pointes coniques sur le premier logement conique 14a et sur le deuxième logement 14b comportant une rainure en V.

Conformément à la figure 2, le capteur de poids 30 comporte une jauge de contrainte 31 qui est agencée sur un corps métallique 32 qui est relié au bâti 2 (Fig. 2). La patte 20, agencée sur la paroi de fond 17 du réservoir 10, est en appui sur le corps métallique 32. Le corps métallique 32 subit une déformation sous l'action du poids de l'eau contenue dans le réservoir 10. La déformation est transmise à la jauge de contrainte 31 qui émet un signal représentatif d'un poids de l'eau contenue dans le réservoir 10 vers le système de commande 50.

La chaudière bitube de la machine à café filtre 1 comporte un tube à eau et un élément chauffant tubulaire reliés ensemble pour que le flux thermique produit par l'élément chauffant soit transmis à l'eau circulant dans le tube à eau. Une fois l'élément chauffant mis sous tension, la chaudière bitube forme un dispositif de soutirage du liquide qui transfère l'eau contenue dans le réservoir 10 vers la douchette qui est agencée au-dessus du porte filtre 4. Le porte filtre 4 est destiné à recevoir un filtre et de la mouture de café approvisionnée par le distributeur de mouture. La quantité de mouture de café est dosée soit pour réaliser une verseuse 5 de café complète qui correspond au volume d'eau complet contenu dans le réservoir 10 ou soit pour réaliser un nombre de tasse de café. Dans ce cas, le système de commande 50 pilote la chaudière bitube pour distribuer le volume d'eau chaude correspondant au nombre de tasse de café demandé. Les signaux transmis par le capteur de poids 30 permettent au système de commande 50 de déterminer quand le volume d'eau soutiré dans le réservoir 10 correspond au volume d'eau nécessaire pour réaliser le nombre de tasse de café demandé.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non illustrée, le réservoir 10 comporte une ouverture supérieure et les premier 12a et deuxième points 12b d'appui sont agencés à proximité de l'ouverture supérieure. Le réservoir 10 comporte une paroi verticale 18 et le capteur de poids 30 peut être agencé entre la paroi verticale 18 et le bâti 2 pour former le troisième point d'appui 12c.

## Revendications

1. Machine de distribution de boissons (1) comportant un bâti (2), un réservoir (10) de liquide monté mobile dans le bâti (2), un système de commande (50) et un capteur de poids (30) agencé entre le réservoir (10) et le bâti (2) pour déterminer et transmettre au dispositif de commande (50) une valeur représentative du poids du liquide présent dans le réservoir (10), **caractérisé en ce que** le réservoir (10) est mobile en rotation dans le bâti (2) autour d'un axe de rotation (11), le réservoir (10) reposant sur le bâti (2) en des premier (12a) et deuxième (12b) points d'appui qui définissent l'axe de rotation (11) et le réservoir (10) reposant sur le capteur de poids (30) en un troisième point d'appui (12c).

2. Machine de distribution de boissons (1) selon la revendication 1, **caractérisée en ce que** le premier point d'appui (12a) est formé par une première pointe conique (13a) et par un premier logement conique (14a), la première pointe conique (13a) appartenant au réservoir (10) et le premier logement conique (14a) appartenant au bâti (2) ou réciproquement.

3. Machine de distribution de boissons (1) selon l'une quelconque des revendications 1 à 2, **caractérisée en ce que** le deuxième point d'appui (12b) est formé par une deuxième pointe conique (13b) et par un deuxième logement (14b) comportant une rainure en V qui s'étend le long de l'axe de rotation (11), la deuxième pointe conique (13b) appartenant au réservoir (10) et le deuxième logement (14b) comportant une rainure en V appartenant au bâti (2) ou réciproquement.

4. Machine de distribution de boissons (1) selon l'une quelconque des revendications 1 à 3, **caractérisée en ce qu'**elle comporte des moyens de mise en pression (21a, 21b) du réservoir (10) sur le bâti (2) en les premier (12a) et deuxième (12b) points d'appui.

5. Machine de distribution de boissons (1) selon la revendication 4, **caractérisée en ce que** les moyens de mise en pression du réservoir sur le bâti comportent au moins un ressort (21a, 21b).

6. Machine de distribution de boissons (1) selon l'une quelconque des revendications 1 à 5, **caractérisée en ce que** le réservoir (10) comporte une paroi de fond (17), l'axe de rotation (11) étant agencé sous la paroi de fond (17).

7. Machine de distribution de boissons (1) selon la revendication 6, **caractérisée en ce que** la paroi de fond (17) du réservoir (10) comporte un premier bord (19a) et un deuxième bord (19b) agencé de manière opposée au premier bord (19a), l'axe de rotation (11) étant agencé à proximité du premier bord (19a) et le capteur de poids (30) étant agencé à proximité du deuxième bord (19b).

8. Machine de distribution de boissons (1) selon l'une quelconque des revendications 1 à 7, **caractérisée en ce que** les premier (12a), deuxième (12b) et troisième (12c) points d'appui sont agencés dans un plan horizontal.

9. Machine de distribution de boissons (1) selon l'une quelconque des revendications 1 à 8, **caractérisée en ce que** le capteur de poids (30) comporte une jauge de contrainte (31) agencée sur un corps métallique (32) qui subit une déformation sous l'action du poids du liquide présent dans le réservoir (10).

10. Machine de distribution de boissons (1) selon l'une quelconque des revendications 1 à 9, **caractérisée en ce que** la machine de distribution de boissons est une machine à café filtre ou une machine à thé.

## Patentansprüche

1. Getränkeausgabemaschine (1), die ein Gestell (2), einen Flüssigkeitstank (10), der in dem Gestell (2) beweglich montiert ist, ein Steuersystem (50) und einen Gewichtssensor (30) umfasst, der zwischen dem Tank (10) und dem Gestell (2) angeordnet ist, um einen für das Gewicht der in dem Tank (10) vorhandenen Flüssigkeit repräsentativen Wert zu bestimmen und an die Steuervorrichtung (50) zu übertragen, **dadurch gekennzeichnet, dass** der Tank (10) in dem Gestell (2) um eine Drehachse (11) drehbeweglich ist, wobei der Tank (10) an einem ersten (12a) und einem zweiten Auflagepunkt (12b), die die Drehachse (11) definieren, an dem Gestell (2) aufliegt, und der Tank (10) an einem dritten Auflagepunkt (12c) an dem Gewichtssensor (30) aufliegt.

2. Getränkeausgabemaschine (1) nach Anspruch 1, **dadurch gekennzeichnet, dass** der erste Auflagepunkt (12a) durch eine erste konische Spitze (13a) und eine erste konische Aufnahme (14a) gebildet wird, wobei die erste konische Spitze (13a) zum Tank (10) gehört und die erste konische Aufnahme (14a) zum Gestell (2) gehört oder umgekehrt.

3. Getränkeausgabemaschine (1) nach einem der Ansprüche 1 bis 2, **dadurch gekennzeichnet, dass** der zweite Auflagepunkt (12b) durch eine zweite konische Spitze (13b) und eine zweite Aufnahme (14b) gebildet wird, die eine V-förmige Vertiefung umfasst, die sich entlang der Drehachse (11) erstreckt, wobei die zweite konische Spitze (13b) zum Tank (10) gehört und die zweite Aufnahme (14b), die eine V-förmige Vertiefung umfasst, zum Gestell (2) gehört oder umgekehrt.

4. Getränkeausgabemaschine (1) nach einem der Ansprüche 1 bis 3, **dadurch gekennzeichnet, dass** sie Mittel zur Druckbeaufschlagung (21a, 21b) des Tanks (10) an dem ersten (12a) und dem zweiten (12b) Auflagepunkt an dem Gestell (2) umfasst.

5. Getränkeausgabemaschine (1) nach Anspruch 4, **dadurch gekennzeichnet, dass** die Mittel zur Druckbeaufschlagung des Tanks an dem Gestell mindestens eine Feder (21a, 21b) umfassen.

6. Getränkeausgabemaschine (1) nach einem der Ansprüche 1 bis 5, **dadurch gekennzeichnet, dass** der Tank (10) eine Bodenwand (17) umfasst, wobei die Drehachse (11) unterhalb der Bodenwand (17) angeordnet ist.

7. Getränkeausgabemaschine (1) nach Anspruch 6, **dadurch gekennzeichnet, dass** die Bodenwand (17) des Tanks (10) eine erste Kante (19a) und eine zweite Kante (19b), die gegenüber der ersten Kante (19a) angeordnet ist, umfasst, wobei die Drehachse (11) neben der ersten Kante (19a) angeordnet ist und der Gewichtssensor (30) neben der zweiten Kante (19b) angeordnet ist.

8. Getränkeausgabemaschine (1) nach einem der Ansprüche 1 bis 7, **dadurch gekennzeichnet, dass** der erste (12a), der zweite (12b) und der dritte Auflagepunkt (12c) in einer horizontalen Ebene angeordnet sind.

9. Getränkeausgabemaschine (1) nach einem der Ansprüche 1 bis 8, **dadurch gekennzeichnet, dass** der Gewichtssensor (30) einen an einem Metallkörper (32) angeordneten Dehnungsmessstreifen (31) umfasst, der unter der Wirkung des Gewichts der im Tank (10) befindlichen Flüssigkeit eine Verformung durchläuft.

10. Getränkeausgabemaschine (1) nach einem der Ansprüche 1 bis 9, **dadurch gekennzeichnet, dass** die Getränkeausgabemaschine eine Filterkaffeemaschine oder eine Teemaschine ist.

## Claims

1. A beverage dispensing machine (1) including a frame (2), a liquid tank (10) movably mounted in the frame (2), a control system (50) and a weight sensor (30) arranged between the tank (10) and the frame (2) for determining and transmitting to the control device (50) a value representative of the weight of the liquid present in the tank (10), **characterized in that** the tank (10) is movable in rotation in the frame (2) about an axis of rotation (11), the tank (10) resting on the frame (2) at first (12a) and second (12b) support points which define the axis of rotation (11) and the tank (10) resting on the weight sensor (30) at a third support point (12c).

2. The beverage dispensing machine (1) according to claim 1, **characterized in that** the first support point (12a) is formed by a first conical tip (13a) and by a first conical housing (14a), the first conical tip (13a) belonging to the tank (10) and the first conical housing (14a) belonging to the frame (2) or vice versa.

3. The beverage dispensing machine (1) according to any one of claims 1 to 2, **characterized in that** the second support point (12b) is formed by a second conical tip (13b) and by a second housing (14b) including a V-groove which extends along the axis of rotation (11), the second conical tip (13b) belonging to the tank (10) and the second housing (14b) including a V-groove belonging to the frame (2) or vice versa.

4. The beverage dispensing machine (1) according to any one of claims 1 to 3, **characterized in that** it includes means (21a, 21b) for pressurizing the tank (10) on the frame (2) at the first (12a) and second (12b) support points.

5. The beverage dispensing machine (1) according to claim 4, **characterized in that** the means for pressurizing the tank on the frame include at least one spring (21a, 21b).

6. The beverage dispensing machine (1) according to any one of claims 1 to 5, **characterized in that** the tank (10) includes a bottom wall (17), the axis of rotation (11) being arranged under the bottom wall (17).

7. The beverage dispensing machine (1) according to claim 6, **characterized in that** the bottom wall (17) of the tank (10) includes a first edge (19a) and a second edge (19b) arranged opposite the first edge (19a), the axis of rotation (11) being arranged close to the first edge (19a) and the weight sensor (30) being arranged close to the second edge (19b).

8. The beverage dispensing machine (1) according to any one of claims 1 to 7, **characterized in that** the first (12a), second (12b) and third (12c) support points are arranged in a horizontal plane.

9. The beverage dispensing machine (1) according to any one of claims 1 to 8, **characterized in that** the weight sensor (30) includes a strain gauge (31) arranged on a metal body (32) which undergoes deformation under the action of the weight of the liquid present in the tank (10).

10. The beverage dispensing machine (1) according to any one of claims 1 to 9, **characterized in that** the beverage dispensing machine is a filter coffee machine or a tea machine.
